# EUROPÄISCHE PATENTSCHRIFT

(11) **EP 3 236 126 B1**
(45) Veröffentlichungstag und Bekanntmachung des Hinweises auf die Patenterteilung: **15.08.2018**
(21) Anmeldenummer: 16166703.5
(22) Anmeldetag: 22.04.2016
(51) Int. Cl.: F16L 23/16, A61M 39/10, F16L 23/22, F16L 25/14

(54) **REDUZIERSTÜCK**
REDUCER
RACCORD DE REDUCTION

(43) Veröffentlichungstag der Anmeldung: 25.10.2017
(73) Patentinhaber: Silroc CZ, a. s., 46841 Tanvald - Sumburk nad Desnou (CZ)
(72) Erfinder: Teichert, Jens, 83670 Bad Heilbrunn (DE)
(74) Vertreter: Winter, Brandl, Fürniss, Hübner, Röss, Kaiser, Polte - Partnerschaft mbB

(56) Entgegenhaltungen:
- EP-A1- 2 988 047
- WO-A2-2007/145779
- US-A- 5 700 039
- Anonymous: "Concentric reducer PFA 1 x 3 4 sanitary clamp from Cole-Parmer", , 14. März 2016 (2016-03-14), XP055310642, Gefunden im Internet: URL:https://web.archive.org/web/2016031401 4643/http://www.coleparmer.com/Product/Con centric_reducer_PFA_1_x_3_4_sanitary_clamp /EW-31530-28 [gefunden am 2016-10-13]

## Beschreibung

Die Erfindung betrifft ein Reduzierstück (Reducer) gemäß dem Oberbegriff des Anspruchs 1. Unter Reduzierstück und Reducer ist ein rohrartiges Verbindungsstück zu verstehen, das eine Veränderung des Durchmessers seiner Durchgangsausnehmung aufweist, um so zwei unterschiedlich große Anschlüsse z.B. für zwei unterschiedliche Schläuche bereitzustellen. Durch das Reduzierstück strömt ein Fluid, z.B. eine Flüssigkeit. US 5700039A offenbart ein Reduzierstück gemäß dem Oberbegriff des Anspruchs 1. Von der Firma Cole Parmer ist unter der Bezeichnung "concentric reducer PFA" ein Reduzierstück aus Perfluoralkoxy-Polymeren (PFA) bekannt, an dessen Endabschnitten zur Verstärkung Ringe im Overmolding-Verfahren angesetzt sind. (Siehe http://www.coleparmer.com/Product/Concentric_reducer_PFA_1_x_3_4_ sanitary_clamp/EW-31530-28.)

Bei Reduzierstücken im pharmazeutischen Bereich sind weiterhin Reduzierstücke bekannt, die aus anderen Kunststoffen, z.B. aus Polypropylen (PP) oder aus Polysulfon gefertigt sind. Dazu sind separate vergleichsweise weiche Dichtringe nötig, die an jeder Stirnseite des Reduzierstücks angesetzt werden müssen, um zwischen dem Endabschnitt des Schlauches und der Stirnseite des Reduzierstücks abzudichten. Die Dichtringe sind oft aus Silikon hergestellt.

Nachteilig an derartigen Reduzierstücken ist, dass die Dichtringe separat sind, und daher die Montage des Reduzierstücks mit den Dichtringen zwischen den Schläuchen aufwändig ist. Insbesondere, wenn absolute Sauberkeit gefordert ist z.B. im pharmazeutischen Bereich, ist ein Herunterfallen der Dichtringe nicht akzeptabel.

Dem gegenüber liegt der Erfindung die Aufgabe zu Grunde, ein Reduzierstück zu schaffen, dessen Montage vereinfacht ist.

Diese Aufgabe wird gelöst durch ein Reduzierstück mit den Merkmalen des Anspruchs 1.

Das beanspruchte Reduzierstück kann auch als Reducer bezeichnet werden und hat einen Hauptkörper, der eine innere Durchgangsausnehmung aufweist, die im Bereich eines größeren Endabschnitts des Hauptkörpers eine größere Mündung und im Bereich eines kleineren Endabschnitts des Hauptkörpers eine kleinere Mündung aufweist. An den beiden an den Endabschnitten gebildeten Stirnseiten des Hauptkörpers ist jeweils eine Dichtung vorgesehen. Erfindungsgemäß sind die beiden Dichtungen und der Hauptkörper mit seinen beiden Endabschnitten einstückig aus Silikon gefertigt. Damit ist ein Reduzierstück geschaffen, dessen Teileanzahl und Montage vereinfacht sind.

Das erfindungsgemäße Reduzierstück ist insbesondere von Vorteil, wenn es im Bereich absoluter Sauberkeit z.B. im pharmazeutischen Bereich verwendet werden soll, da die Dichtungen des erfindungsgemäßen Reduzierstücks nicht herunterfallen können.

Weitere vorteilhafte Ausgestaltungen der Erfindung sind in den abhängigen Ansprüchen beschrieben.

Bei einer besonders bevorzugten Weiterbildung ist an den beiden Endabschnitten jeweils eine radiale Erweiterung ebenfalls einstückig mit dem Hauptkörper gebildet. Am Außenumfang der beiden Endabschnitte ist jeweils ein vollumfänglicher Spannring angeordnet, der an der jeweiligen radialen Erweiterung anliegt. Die beiden Spannringe sind gegen die jeweilige radiale Erweiterung spannbar. Da die beiden Spannringe eine größere Härte als das Silikon der radialen Erweiterungen aufweisen, können sie eine axiale Spannkraft am Umfang der radialen Erweiterungen und damit am Umfang der Dichtungen vergleichmäßigen. Alternativ können die radiale Erweiterung und der Spannring auch nur an einem Endabschnitt vorgesehen sein.

Vorzugsweise ist der zumindest eine Spannring aus Kunststoff, z.B. Polypropylen gefertigt. Damit ist er kostengünstig herstellbar und weist eine deutlich höhere Härte auf, als das Silikon der radialen Erweiterungen bzw. der Dichtungen.

Vorzugsweise ist der zumindest eine Spannring mittels eines Klemmrings gegen die jeweilige radiale Erweiterung spannbar, und weist eine konische Anlagefläche für den Klemmring auf. Insbesondere kommt dabei das Tri-Clamp-System in Betracht.

Insbesondere an dem größeren Endabschnitt kann die dortige größere radiale Erweiterung zu einen Flansch weitergebildet sein.

Vorzugsweise ist das Reduzierstück, also sein Hauptkörper und die beiden Spannringe, konzentrisch zu einer Mittelachse.

Die Dichtungen erstrecken sich bevorzugt in axialer Richtung weg von der jeweiligen radialen Erweiterung.

Zur Ausbildung einer "weiblichen" Stirnseite ist die betroffene Dichtung von einem einstückig mit der radialen Erweiterung gebildeten Dichtring gebildet, der am Außenumfang der Stirnseite angeordnet ist, so dass am Innenumfang des Dichtrings eine kreisscheibenförmige Anlagefläche angeordnet ist.

Die "weibliche" Stirnseite kann die kleinere Stirnseite sein. Der am kleineren Endabschnitt vorgesehene kleinere Spannring kann an seiner der kleineren radialen Erweiterung zugewandten Seite an seinem Außenumfang einen sich in axialer Richtung erstreckenden Rand aufweisen, der den zugeordneten kleineren Endabschnitt an dessen Außenseite umfasst.

Zur Ausbildung einer "männlichen" Stirnseite ist die betroffene Dichtung von einem einstückig mit der radialen Erweiterung gebildeten umlaufenden wulstartigen Dichtring gebildet, an dessen Innenumfang und an dessen Außenumfang jeweils eine kreisscheibenförmige Anlagefläche der radialen Erweiterung bzw. des Flansches angeordnet ist.

Die "männliche" Stirnseite kann die größere Stirnseite sein. Wenn die Durchgangsausnehmung im Bereich des größeren Endabschnitts einen konisch erweiterten Abschnitt aufweist, und wenn die Außenmantelfläche des Hauptkörpers einen Knick aufweist, kann sich dort eine Stelle mit minimaler Wandstärke ergeben. Dann wird es besonders bevorzugt, wenn der am größeren Endabschnitt vorgesehene größere Spannring an seiner von der radialen Erweiterung abgewandten Seite einen einstückig mit dem Spannring gebildeten kreiszylindrischen Rohrabschnitt aufweist und damit zu einer Stützhülse für die Stelle mit minimaler Wandstärke weitergebildet ist.

Bei einer bevorzugten Ausgestaltung sind die beiden Seiten derart unterschiedlich groß, dass der Durchmesser des größeren Dichtrings mindestens doppelt so groß wie der Durchmesser des kleineren Dichtrings ist, und / oder dass der Innendurchmesser der größere Mündung und damit der maximale Innendurchmesser des konischen Abschnitts mindestens doppelt so groß wie der Innendurchmesser der kleineren Mündung ist.

Ein Ausführungsbeispiel eines erfindungsgemäßen Reduzierstücks ist in den Figuren dargestellt. Es zeigen
Figur 1 in einem Längsschnitt das Reduzierstück gemäß dem Ausführungsbeispiel, und
Figur 2 in einer Ansicht das Reduzierstück gemäß dem Ausführungsbeispiel.

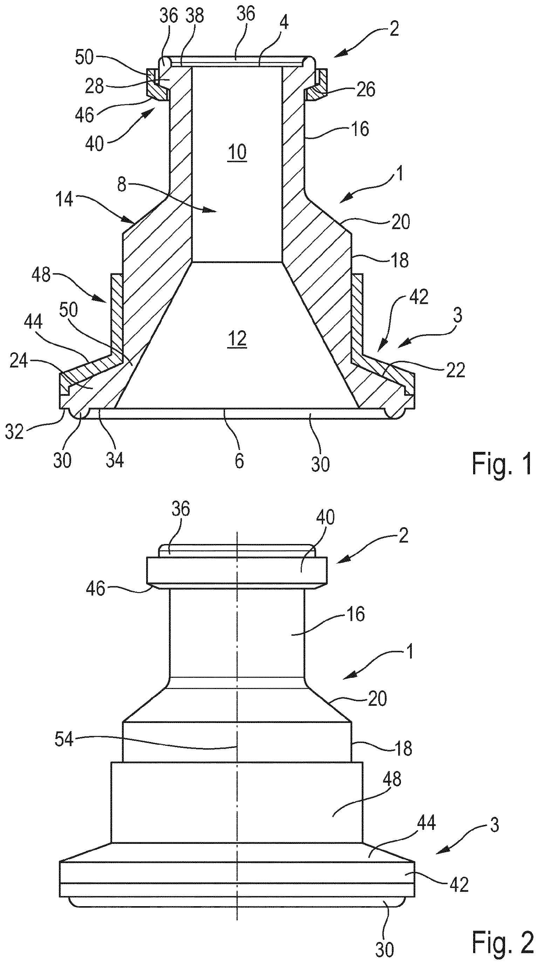

Figur 1 zeigt in einem Längsschnitt das Ausführungsbeispiel des Reduzierstücks. Es hat einen Hauptkörper 1 mit einem kleineren Endabschnitt 2 und mit einem größeren Endabschnitt 3. In einer Stirnseite des kleineren Endabschnitts 2 ist eine kleinere Mündung 4 vorgesehen, während entsprechend an einer Stirnseite des größeren Endabschnitts 3 eine größere Mündung 6 vorgesehen ist. Die beiden Mündungen 4, 6 sind über eine Durchgangsausnehmung 8 miteinander verbunden, die in einen kleineren kreiszylindrischen Abschnitt 10 und in einen größeren kegelstumpfförmigen oder konischen Abschnitt 12 unterteilt ist.

An einem Außenmantel 14 des Hauptkörpers 1 ist im Bereich des kleineren Endabschnitts 2 ein kleinerer kreiszylindrischer Abschnitt 16 vorgehsehen, während entsprechend im Bereich des größeren Endabschnitts 3 ein größerer kreiszylindrischer Abschnitt 18 vorgesehen ist. Weiterhin hat der Außenmantel 14 zwischen den beiden kreiszylindrischen Abschnitten 16, 18 einen kegelstumpfförmiger bzw. konischen Abschnitt 20.

Am Außenumfang des größeren Endabschnitts 3 ist ein weiterer kegelstumpfförmiger bzw. konischer Abschnitt 22 vorgesehen. Damit ist am größeren Endabschnitt 3 eine größere radiale Erweiterung 24 gebildet, die auch als Flansch bezeichnet werden kann. Am kleineren Endabschnitt 2 ist entsprechend ein weiterer kegelstumpfförmiger bzw. konischer Abschnitt 26 vorgesehen, womit auch am kleineren Endabschnitt 2 eine kleinere radiale Erweiterung 28 gebildet ist.

Stirnseitig an der größeren radialen Erweiterung 24 ist ein kreisringförmiger Vorsprung oder Wulst gebildet, der als größerer Dichtring 30 dient. Am Außenumfang und am Innenumfang des größeren Dichtrings 30 jeweils eine kreisscheibenförmige Anlagefläche 32, 34 vorgesehen, wobei die innere kreisscheibenförmige Anlagefläche 34 sich vom größeren Dichtring 30 bis zur größeren Mündung 6 erstreckt.

Am Außenumfang der kleineren radialen Erweiterung 28 und stirnseitig an der kleineren radialen Erweiterung 28 ist ein umlaufender Vorsprung oder Wulst gebildet, der als kleinerer Dichtring 36 dient. Zwischen dem Innenumfang des kleineren Dichtrings 36 und dem Außenumfang der kleineren Mündung 4 ist eine innere kreisscheibenförmige Anlagefläche 38 vorgesehen.

Erfindungsgemäß ist der gesamte Hauptkörper 1, also einschließlich der beiden Endabschnitte 2, 3, der beiden radialen Erweiterungen 24, 28 und der beiden Dichtringe 30, 36 einstückig aus Silikon mit einer Shore-Härte von etwa 70 gebildet, wobei der Hauptkörper 1 bei seiner Herstellung mit 200 °C getempert wird. Damit ist der Hauptkörper 1 für Drücke in seiner Durchgangsausnehmung 8 von bis zu 3,5 bar ausgelegt.

Am Außenumfang des kleineren Endabschnitts 2 ist ein kleinerer Spannring 40 vorgesehen, während am Außenumfang des größeren Endabschnitts 3 ein größerer Spannring 42 vorgesehen ist. Die Spannringe 40, 42 liegen mit entsprechenden konischen Abschnitten an den konischen Abschnitten 22, 26 der radialen Erweiterungen 24, 28 an und werden dabei über (nicht gezeigte) Tri-Clamp-Klemmringe an die jeweiligen (ebenfalls nicht gezeigten) Anschlüsse gespannt. Dazu haben die Spannringe 40, 42 an ihren von den radialen Erweiterungen 24, 28 abgewandten Außenseiten jeweils ebenfalls einen konischen Abschnitt, der als Anlagefläche 44, 46 für den jeweiligen Tri-Clamp-Klemmring dient. Damit werden die Dichtringe 30, 36 in axialer Richtung von den Tri-Clamp-Klemmringen über den jeweiligen Spannring 40, 42 und über die jeweilige radiale Erweiterung 24, 28 gegen den jeweiligen Anschluss gepresst. Die Spannringe 40, 42 sind aus Polypropylen und daher deutlich fester als das Silikon. Damit können die Spannringe 40, 42 die Kräfte der Tri-Clamp-Klemmringe am Umfang vergleichmäßigen und so eine optimale Dichtung durch die Dichtringe 30, 36 gewährleisten.

Einstückig an den größeren Spannring 42 ist ein kreiszylindrischer Rohrabschnitt 48 angesetzt, dessen Länge etwas kürzer als diejenige des größeren kreiszylindrischen Abschnitts 18 des Hauptkörpers 1 ist. Damit bildet der größere Spannring 42 zusammen mit dem kreiszylindrischen Rohrabschnitt 48 ein Stützstück oder eine Stützhülse für eine Stelle 50 des Hauptkörpers 1, die minimale Wandstärke bzw. Wanddicke hat. Diese Stelle 50 entsteht dort, wo der Außenmantel 14 (im Querschnitt gemäß Figur 1 betrachtet) einen Knick aufweist. Dieser Knick ist zwischen dem größeren kreiszylindrischen Abschnitt 18 und dem größeren konischen Abschnitt 22 des Außenmantels 14 angeordnet. Im Inneren des Hauptabschnitts 1 erstreckt sich über diese Stelle 50 der konische Abschnitt 12. Insbesondere bei Ausführungsbeispielen des erfindungsgemäßen Reduzierstücks, bei denen am größeren Endabschnitt 3 große Mündungen 6 vorgesehen werden müssen, wird die Wandstärke der Stelle 50 gering, sodass die Kräfte, die durch den Innendruck in der Durchgangsausnehmung 8 auf die Stelle 50 wirken, durch die am Außenumfang der Stelle 50 anliegende Stützhülse 42, 48 aufgenommen werden.

Am Außenumfang des kleineren Spannrings 40 ist ein vergleichsweise kurzer kreiszylindrischer Rohrabschnitt einstückig angesetzt, der als Rand 50 bezeichnet wird. Der Rand 50 umfasst die kleinere radiale Erweiterung 28 an ihrem Außenumfang. Dabei ist der Rand 50 derart kurz bemessen, dass er nicht den kleineren Dichtring 36 überdeckt, so dass dieser im montierten Zustand des Reduzierstücks zusammengedrückt werden kann und damit optimal dichten kann.

Der Rand 50 ist - in radialer Richtung betrachtet - etwas beabstandet zu der kleinere radialen Erweiterung 28. Auf vergleichbare Weist ist auch der kleinere Spannring 40 etwas zu dem kleineren kreiszylindrischen Abschnitt 16 des Außenmantels 14 beabstandet. Damit ergibt sich eine Spielpassung zwischen dem Hauptkörper 1 und dem kleineren Spannring 40 mit seinem Rand 50. Bei der Montage wird der kleinere Spannring 40 mit dem Rand 50 über den Dichtring 36 und über die kleinere radiale Erweiterung 28 geschoben, wozu deren Silikon zusammengedrückt werden muss.

Figur 2 zeigt eine Außenansicht des Reduzierstücks gemäß Figur 1. Das Reduzierstück ist rotationssymmetrisch zu einer Mittelachse 54.

Offenbart ist ein Reduzierstück aus Silikon, das zwischen zwei Anschlüsse eingesetzt wird. Das Reduzierstück hat beidseitig einen jeweiligen Spannring, über den ein jeweiliger einstückig mit dem Reduzierstück gebildeter Dichtring an einen Anschluss gepresst werden kann. Dazu sind die beiden Spannringe härter als das Silikon. Vorzugsweise sind die Spannringe an das Tri-Clamp-System angepasst. Einer der Spannringe kann axial verlängert sein und damit zu einer Stützhülse für eine Stelle mit minimaler Wandstärke weitergebildet sein.

### Bezugszeichenliste

- 1: Hauptkörper
- 2: kleinerer Endabschnitt
- 3: größerer Endabschnitt
- 4: kleinere Mündung
- 6: größere Mündung
- 8: Durchgangsausnehmung
- 10: kreiszylindrischer Abschnitt
- 12: konischer Abschnitt
- 14: Außenmantel
- 16: kleinerer kreiszylindrischer Abschnitt
- 18: größerer kreiszylindrischer Abschnitt
- 20: konischer Abschnitt
- 22: größerer konischer Abschnitt
- 24: größere radiale Erweiterung
- 26: konischer Abschnitt
- 28: kleinere radiale Erweiterung
- 30: größerer Dichtring
- 32: äußere kreisscheibenförmige Anlagefläche
- 34: innere kreisscheibenförmige Anlagefläche
- 36: kleinerer Dichtring
- 38: innere kreisscheibenförmige Anlagefläche
- 40: kleinerer Spannring
- 42: größerer Spannring
- 44: größere konische Anlagefläche
- 46: kleinere konische Anlagefläche
- 48: kreiszylindrischer Rohrabschnitt
- 50: Stelle mit minimaler Wandstärke
- 52: Rand
- 54: Mittelachse

## Patentansprüche

1. Reduzierstück mit einem Hauptkörper (1), der eine innere Durchgangsausnehmung (8) aufweist, die an einem größeren Endabschnitt (3) des Hauptkörpers (1) eine größere Mündung (6) und an einem kleineren Endabschnitt (2) des Hauptkörpers (1) eine kleinere Mündung (4) aufweist, **dadurch gekennzeichnet, dass** an den beiden an den Endabschnitten (2, 3) gebildeten Stirnseiten jeweils eine Dichtung (30, 36) vorgesehen ist, wobei der Hauptkörper (1) und die beiden Dichtungen (30, 36) einstückig aus Silikon gefertigt sind.

2. Reduzierstück nach Anspruch 1, das an zumindest einem Außenumfang der beiden Endabschnitte (2, 3) mit einem Spannring (40, 42) versehen ist, und der an einer am Endabschnitt (2, 3) gebildeten radialen Erweiterung (24, 28) anliegt, wobei der Spannring (40, 42) eine größere Härte als die radiale Erweiterung (24, 28) aufweist, und wobei der Spannring (40, 42) gegen die radiale Erweiterung (24, 28) spannbar ist.

3. Reduzierstück nach Anspruch 2, wobei der zumindest eine Spannring (40, 42) mittels eines Klemmrings gegen die radiale Erweiterung (24, 28) spannbar ist, und wobei der Spannring (40, 42) eine konische Anlagefläche (44, 46) für den Klemmring aufweist.

4. Reduzierstück nach Anspruch 2 oder 3, wobei sich die Dichtungen (30, 36) von der jeweiligen radialen Erweiterung (24, 28) in axialer Richtung erstrecken.

5. Reduzierstück nach einem der Ansprüche 2 bis 4, wobei zumindest eine Dichtung (36) von einem einstückig mit der radialen Erweiterung (28) gebildeten Dichtring (36) gebildet ist, an dessen Innenumfang eine kreisscheibenförmige Anlagefläche (38) angeordnet ist.

6. Reduzierstück nach Anspruch 5 mit zwei Spannringen (40, 42), wobei ein am kleineren Endabschnitt (2) vorgesehener kleinerer Spannring (40) an seiner der radialen Erweiterung (28) zugewandten Seite an seinem Außenumfang einen sich in axialer Richtung erstreckenden Rand (50) aufweist, der die zugeordnete radiale Erweiterung (28) umfasst.

7. Reduzierstück nach einem der Ansprüche 2 bis 6, wobei zumindest eine Dichtung (30) von einem einstückig mit der radialen Erweiterung (24) gebildeten umlaufenden Dichtring (30) gebildet ist, an dessen Innenumfang und an dessen Außenumfang jeweils eine kreisscheibenförmige Anlagefläche (32, 34) angeordnet ist.

8. Reduzierstück nach einem der Ansprüche 2 bis 7 mit zwei Spannringen (40, 42), wobei die Durchgangsausnehmung (8) im Bereich des größeren Endabschnitts (3) einen konischen Abschnitt (12) aufweist, an dem der Hauptkörper (1) eine Stelle (50) mit minimaler Wandstärke hat, und wobei ein am größeren Endabschnitt (3) vorgesehener größerer Spannring (42) an seiner von der radialen Erweiterung (24) abgewandten Seite einen einstückig mit dem Spannring (42) gebildeten kreiszylindrischen Rohrabschnitt (48) aufweist.

9. Reduzierstück nach zumindest nach den Ansprüchen 5 und 7, wobei ein Durchmesser des größeren Dichtrings (30) mindestens doppelt so groß wie ein Durchmesser des kleineren Dichtrings (36) ist.

10. Reduzierstück nach einem der vorhergehenden Ansprüche, wobei ein Durchmesser der größeren Mündung (6) mindestens doppelt so groß wie ein Durchmesser der kleineren Mündung (4) ist.

## Claims

1. Reducer with a main body (1) which has an inner through recess (8) which has at a larger end section (3) of the main body (1) a larger opening (6) and at a smaller end section (2) of the main body (1) a smaller opening (4), **characterised in that** at the two end faces formed at the end sections (2, 3) is provided in each case a seal (30, 36), wherein the main body (1) and the two seals (30, 36) are manufactured in one piece from silicone.

2. Reducer according to claim 1, which has at at least one outer perimeter of the two end sections (2, 3) a tensioning ring (40, 42) and which abuts against a radial extension (24, 28) formed at the end section (2, 3), wherein the tensioning ring (40, 42) has a greater hardness than the radial extension (24, 28), and wherein the tensioning ring (40, 42) can be tensioned against the radial extension (24, 28).

3. Reducer according to claim 2, wherein the at least one tensioning ring (40, 42) can be tensioned by means of a clamping ring against the radial extension (24, 28), and wherein the tensioning ring (40, 42) has a conical abutment surface (44, 46) for the clamping ring.

4. Reducer according to claim 2 or 3, wherein the seals (30, 36) extend from the respective radial extension (24, 28) in axial direction.

5. Reducer according to one of claims 2 to 4, wherein at least one seal (36) is formed from a sealing ring (36) formed in one piece with the radial extension (28), at the inner perimeter of which sealing ring is disposed a circular disc-shaped abutment surface (38).

6. Reducer according to claim 5 with two tensioning rings (40, 42), wherein a smaller tensioning ring (40) provided at the smaller end section (2) has at its side at its outer perimeter, said side facing the radial extension (28), an edge (50) extending in axial direction, which comprises the associated radial extension (28)

7. Reducer according to one of claims 2 to 6, wherein at least one seal (30) is formed from a circumferential sealing ring (30) formed in one piece with the radial extension (24), at the inner perimeter and at the outer perimeter of which sealing ring is disposed in each case a circular disc shaped abutment surface (32, 34).

8. Reducer according to one of claims 2 to 7 with two tensioning rings (40, 42), wherein the through recess (8) has in the region of the larger end section (3) a conical section (12) at which the main body (1) has a location (50) with minimal wall thickness, and wherein a larger tensioning ring (42) provided at the larger end section (3) has at its side facing away from the radial extension (24) a circularly cylindrical pipe section (48) formed in one piece with the tensioning ring (42).

9. Reducer according to at least according to claims 5 and 7, wherein a diameter of the larger sealing ring (30) is at least twice as large as a diameter of the smaller sealing ring (36).

10. Reducer according to one of the preceding claims, wherein a diameter of the larger opening (6) is at least twice as large as a diameter of the smaller opening (4).

## Revendications

1. Raccord de réduction avec un corps principal (1) qui présente un évidement débouchant (8) intérieur qui présente sur une section d'extrémité (3) supérieure du corps principal (1) une embouchure (6) supérieure et sur une section d'extrémité (2) inférieure du corps principal (1) une embouchure (4) inférieure, **caractérisé en ce que** respectivement une garniture (30, 36) est prévue sur les deux côtés avant formés sur les sections d'extrémité (2, 3), dans lequel le corps principal (1) et les deux garnitures (30, 36) sont fabriquées d'un seul tenant en silicone.

2. Raccord de réduction selon la revendication 1, qui est pourvu d'un anneau de serrage (40, 42) sur au moins une périphérie extérieure des deux sections d'extrémité (2, 3), et qui repose contre un élargissement (24, 28) radial formé sur la section d'extrémité (2, 3), dans lequel l'anneau de serrage (40, 42) présente une dureté plus grande que l'élargissement (24, 28) radial, et dans lequel l'anneau de serrage (40, 42) peut être serré contre l'élargissement (24, 28) radial.

3. Raccord de réduction selon la revendication 2, dans lequel l'au moins un anneau de serrage (40, 42) peut être serré au moyen d'un anneau de blocage contre l'élargissement (24, 28) radial et dans lequel l'anneau de serrage (40, 42) présente une surface d'appui (44, 46) conique pour l'anneau de blocage.

4. Raccord de réduction selon la revendication 2 ou 3, dans lequel les garnitures (30, 36) s'étendent depuis l'élargissement (24, 28) radial respectif dans le sens axial.

5. Raccord de réduction selon l'une quelconque des revendications 2 à 4, dans lequel au moins une garniture (36) est formée par un anneau étanche (36) formé d'un seul tenant avec l'élargissement (28) radial, sur la périphérie intérieure duquel une surface d'appui (38) en forme de disque circulaire est agencée.

6. Raccord de réduction selon la revendication 5, avec deux anneaux de serrage (40, 42), dans lequel un anneau de serrage (40) inférieur prévu sur la section d'extrémité (2) inférieure sur son côté tourné vers l'élargissement (28) radial présente sur sa périphérie extérieure un bord (50) s'étendant dans le sens axial qui comporte l'élargissement (28) radial associé.

7. Raccord de réduction selon l'une quelconque des revendications 2 à 6, dans lequel au moins une garniture (30) est formée d'un anneau étanche (30) tournant formé d'un seul tenant avec l'élargissement (24) radial, sur la périphérie intérieure duquel et sur la périphérie extérieure duquel respectivement une surface d'appui (32, 34) en forme de disque circulaire est agencée.

8. Raccord de réduction selon l'une quelconque des revendications 2 à 7, avec deux anneaux de serrage (40, 42), dans laquelle l'évidement débouchant (8) présente dans la zone de la section d'extrémité (3) supérieure une section conique (12) sur laquelle le corps principal (1) présente un point (50) avec une épaisseur de paroi minimale, et dans lequel un anneau de serrage (42) supérieur prévu sur la section d'extrémité (3) supérieure présente sur son côté éloigné de l'élargissement (24) radial une section tubulaire (48) cylindrique et circulaire formée d'un seul tenant avec l'anneau de serrage (42).

9. Raccord de réduction selon au moins selon les revendications 5 et 7, dans lequel un diamètre de l'anneau étanche (30) supérieur est au moins deux fois plus grand qu'un diamètre de l'anneau étanche (36) inférieur.

10. Raccord de réduction selon l'une quelconque des revendications précédentes, dans laquelle un diamètre de l'embouchure (6) supérieure est au moins deux fois plus grand qu'un diamètre de l'embouchure (4) inférieure.
